(19) Europäisches Patentamt
European Patent Office
Office européen des brevets

(11) Publication number: **0 107 370**
**B2**

(12) **NEW EUROPEAN PATENT SPECIFICATION**

(45) Date of publication of the new patent specification: **15.03.89**

(51) Int. Cl.[4]: **C 01 B 33/28**

(21) Application number: **83305747.4**

(22) Date of filing: **26.09.83**

(54) **Zeolite.**

(30) Priority: **27.09.82 US 425019**
**27.09.82 US 425018**

(43) Date of publication of application:
**02.05.84 Bulletin 84/18**

(45) Publication of the grant of the patent:
**20.11.86 Bulletin 86/47**

(45) Mention of the opposition decision:
**15.03.89 Bulletin 89/11**

(84) Designated contracting states:
**BE DE FR GB IT NL SE**

(56) References cited:
**EP-A- 0 001 695**
**EP-A- 0 028 516**
**EP-A- 0 040 016**
**EP-A- 0 091 048**
**US-A- 3 459 676**
**US-A- 4 046 859**
**US-A- 4 086 186**

(73) Proprietor: **MOBIL OIL CORPORATION**
**150 East 42nd Street**
**New York New York 10017 (US)**

(72) Inventor: **Rosinski, Edward Joseph**
**Box A**
**Pedricktown New Jersey 08067 (US)**
Inventor: **Rubin, Mae Koenig**
**50 Belmont Avenue**
**Bala Cynwyd Pennsylvania 19004 (US)**

(74) Representative: **Carpmael, John William Maurice et al**
**CARPMAELS & RANSFORD 43 Bloomsbury Square**
**London, WC1A 2RA (GB)**

**EP 0 107 370 B2**

## Description

This invention relates to a method of synthesising zeolite ZSM-45.

The lattice of a crystalline zeolite, natural or synthetic, can be described as a rigid three-dimensional framework of $SiO_4$ and $AlO_4$ in which the tetrahedra are cross-linked by the sharing of oxygen atoms whereby the ratio of the total aluminium and silicon atoms to oxygen atoms is 1 : 2. The electrovalence of the tetrahedra containing aluminium is balanced by a cation, for example an alkali metal or alkaline earth metal cation. The ratio cationic-valence/aluminium is thus unity. One cation may be exchanged for another in conventional manner. By means of such cation exchange it has been possible to vary the properties of a given zeolite.

Since the cationic content of a zeolite may thus be regarded as ephemeral the only significant term in its compositional formula is the ratio of lattic silicon to aluminium, usually expressed as silica/alumina ratio. The $SiO_2/Al_2O_3$ ratio of a given zeolite is however often variable. For example, zeolite X can be synthesized with $SiO_2/Al_2O_3$ ratios of from 2 to 3 ; zeolite Y, from 3 to about 6. In some zeolites, the upper limit of the $SiO_2/Al_2O_3$ ratio is unbounded. ZSM-5 is one such example wherein the $SiO_2/Al_2O_3$ ratio is at least 5 and up to infinity. US-A-3,941,871 discloses a zeolite made from a reaction mixture containing no added alumina and exhibiting the x-ray diffraction pattern of zeolite ZSM-5. US-A-4,061,724 ; 4,073,865 and 4,104,294 describe zeolites of similar alumina and metal content.

Synthetic zeolites sometimes resemble naturally occurring zeolites. Zeolites ZSM-35 and ZSM-38 are, for instance, ferrierite-type zeolites. Zeolite ZK-20 (US-A-3,459,676) is described as being isostructural with the naturally occurring zeolite levynite. EP-A-40,016 describes synthetic zeolite Nu-3 which sorbs little or no p-xylene and is stated to have a pore size in the sodium-hydrogen form of 4.3 A.

ZSM-45 has the formula, on an anhydrous basis, in terms of mole ratios of oxides :

$$M_{2/n}O : Al_2O_3 : > 8\ SiO_2$$

(in which M is a cation of valence n) and the x-ray powder diffraction pattern set forth in Table 1 below. In the as-synthesised form the zeolite usually conforms to the formula, on an anhydrous basis and in terms of mole ratios of oxides :

$$(0.8\text{-}1.8)\ R_2O : (0.0\text{-}0.3)\ Na_2O : (0.0\text{-}0.5)\ K_2O : Al_2O_3 : xSiO_2$$

wherein R is an organic cation derived from a 2-(hydroxyalkyl) trialkylammonium compound where alkyl is composed of one or two carbon atoms and x is greater than 8, usually from 8 to 100.

The original alkali metal cations of the as synthesized ZSM-45 can be replaced in accordance with techniques well known in the art, at least in part, by ion exchange with other cations. Preferred replacing cations include metal ions, hydrogen ions, hydrogen precursor, e. g. ammonium, ions and mixtures thereof. Particularly preferred cations are those which render the ZSM-45 catalytically active, especially for hydrocarbon conversion. These include hydrogen, rare earth metals and metals of Groups IA, IIA, IIIA, IVA, IB, IIB, IIIB, IVB, VIB and VIII of the Periodic Table of the Elements.

Typical ion exchange technique would be to contact the synthetic ZSM-45 with a salt of the desired replacing cation or cations. Examples of such salts include the halides, e. g. chlorides, nitrates and sulfates.

The 2-(hydroxyalkyl) trialkylammonium compounds providing the organic cation, i. e., R, in the synthesized form of zeolite ZSM-45 may be the hydroxide or halide, e. g. chloride, compounds. The coumpound 2-(hydroxyethyl) trimethylammonium chloride is known as choline chloride, a preferred source of the organic cations.

Zeolite ZSM-45 has the following x-ray diffraction pattern.

Table 1

| Interplanar D-spacing (A) | Relative intensity, I/Io |
|---|---|
| 10.16 ± 0.18 | Weak |
| 8.02 ± 0.14 | Strong-Very strong |
| 7.56 ± 0.14 | Weak |
| 6.55 ± 0.12 | Medium-Very strong |
| 5.66 ± 0.10 | Weak |
| 5.50 ± 0.10 | Weak |
| 5.07 ± 0.09 | Medium-Strong |
| 4.95 ± 0.09 | Weak |
| 4.21 ± 0.08 | Medium-Strong |
| 4.01 ± 0.07 | Strong-Very strong |

Table 1 (contd.)

| Interplanar D-spacing (A) | Relative intensity, I/Io |
|---|---|
| 3.78 ± 0.07 | Medium-Strong |
| 3.60 ± 0.06 | Weak |
| 3.54 ± 0.06 | Weak-Medium |
| 3.42 ± 0.06 | Weak |
| 3.27 ± 0.06 | Medium |
| 3.11 ± 0.06 | Medium-Strong |
| 3.03 ± 0.05 | Weak |
| 2.812 ± 0.05 | Weak |
| 2.751 ± 0.05 | Medium-Strong |
| 2.583 ± 0.05 | Weak |
| 2.535 ± 0.05 | Weak |
| 2.521 ± 0.05 | Weak |
| 2.475 ± 0.04 | Weak |
| 2.405 ± 0.04 | Weak |
| 2.362 ± 0.04 | Weak |
| 2.251 ± 0.04 | Weak |
| 2.181 ± 0.04 | Weak |
| 2.133 ± 0.04 | Weak |
| 2.097 ± 0.04 | Weak |
| 2.029 ± 0.04 | Weak |
| 2.006 ± 0.03 | Weak |
| 1.889 ± 0.03 | Weak |
| 1.859 ± 0.03 | Weak |
| 1.843 ± 0.03 | Weak |
| 1.815 ± 0.03 | Weak |
| 1.765 ± 0.03 | Weak |
| 1.721 ± 0.03 | Weak |
| 1.710 ± 0.03 | Weak |
| 1.650 ± 0.03 | Weak |
| 1.637 ± 0.03 | Weak |
| 1.617 ± 0.03 | Weak |
| 1.606 ± 0.03 | Weak |
| 1.559 ± 0.03 | Weak |

1 Å = 0.1 nm.

These values were determined by standard techniques. The radiation was the K-alpha doublet of copper and a diffractometer equipped with a scintillation counter and an associated computer was used. The peak heights, I, and the positions as a function of 2 theta, where theta is the Bragg angle, were determined using algorithms on the computer associated with the spectrometer. From these, the relative intensities, 100 $I/I_0$, where $I_0$ is the intensity of the strongest line or peak, and d (obs.) the interplanar spacing in Angstrom units (A), corresponding to the recorded lines, were determined. In Table 1, the relative intensities are given in terms of the strongest line being taken as 100.0. It should be understood that this X-ray diffraction pattern is characteristic of all the species of zeolite ZSM-45 compositions. The sodium form as well as other cationic forms reveal substantially the same pattern with some minor shifts in interplanar spacing and variation in relative intensity. Other minor variations can occur, depending on the silicon to aluminum ratio of the particular sample, as well as its degree of thermal treatment.

Zeolite ZSM-45 sorbs significant amounts of commonly used test adsorbate materials, i. e. cyclohexane, n-hexane and water, whereas naturally occurring levynite is not expected to adsorb cyclohexane due to its pore structure. Sorption capacities for zeolite ZSM-45 will range at room temperature as follows :

| Adsorbate | Capacity, wt. percent |
|---|---|
| Cyclohexane | 2.2-7.0 |
| n-Hexane | 7.3-12.9 |
| Water | 14.5-22.9 |

Zeolite ZSM-45 can be used either in the alkali metal form, e. g. the sodium or potassium form ; the ammonium form ; the hydrogen form or another univalent or multivalent cationic form. When used as a catalyst the zeolite will be subjected to thermal treatment to remove part or all of the organic constituent.

The zeolite can also be used as a catalyst in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such component can be exchanged into the composition to the extent aluminum is in the structure, impregnated therein or intimately physically admixed therewith. Such component can be impregnated in or on to it such as for example, by, in the case of platinum, treating the zeolite with a solution containing a platinum metal-containing ion. Thus, suitable platinum compounds include chloroplatinic acid, platinous chloride and various compounds containing the platinum amine complex.

Zeolite ZSM-45, especially in its metal, hydrogen and ammonium forms can be beneficially converted to another form by thermal treatment. This thermal treatment is generally performed by heating one of these forms at a temperature of at least 370 °C for at least 1 minute and generally not longer than 20 hours. While subatmospheric pressure can be employed for the thermal treatment, atmospheric pressure is desired for reasons of convenience. The thermal treatment can be performed at a temperature up to about 925 °C. The thermally treated product is particularly useful in the catalysis of certain hydrocarbon conversion reactions.

The zeolite, when employed either as an adsorbent or as a catalyst in an organic compound conversion process should be dehydrated, at least partially. This can be done by heating to a temperature in the range of 200 °C to 595 °C in an inert atmosphere, such as air, nitrogen, etc. and at atmospheric, subatmospheric or superatmospheric pressures for between 30 minutes and 48 hours. Dehydration can also be performed at room temperature merely by placing ZSM-45 in a vacuum, but a longer time is required to obtain a sufficient amount of dehydration.

The zeolite is prepared from a reaction mixture containing sources of alkali metal ions (M), an oxide of aluminum, an oxide of silicon, an organic cation (R) derived from a 2-(hydroxyalkyl)trialkylammonium compound wherein alkyl is composed of one or two carbon atoms and water and having a composition, in terms of mole ratios of oxides, falling within the following ranges :

| Reactants | Useful | Preferred |
|---|---|---|
| $SiO_2/Al_2O_3$ | 10—150 | 15—80 |
| $OH^-/SiO_2$ | 0.3—1.0 | 0.3—0.8 |
| $H_2O/OH^-$ | 20—100 | 20—80 |
| R/R+M | 0.1—0.8 | 0.2—0.7 |
| K/K+Na | 0.0—0.8 | 0.05—0.3 |

wherein R and M are as above defined.

Crystallization of the zeolite ZSM-45 can be carried out at either static or stirred condition in a suitable reactor vessel, such as for example, polypropylene jars or teflon lined or stainless steel autoclaves. A useful range of temperatures for crystallization is from about 80 °C to about 350 °C for a time of about 12 hours to about 145 days. Thereafter, the crystals are separated from the liquid and recovered. The composition can be prepared utilizing materials which supply the appropriate oxides. Such compositions may include sodium silicate, silica hydrosol, silica gel, silicic acid, sodium hydroxide, a source of aluminum, and an appropriate organic compound. It should be realized that the reaction mixture component oxides can be supplied from more than one source. The reaction mixture can be prepared either batchwise or continuously. Crystal size and crystallization time of the crystalline zeolite ZSM-45 will vary with the nature of the reaction mixture employed and the crystallization conditions.

In all cases, synthesis of the ZSM-45 crystals is facilitated by the presence of at least 0.01 percent, preferably 0.10 percent and still more preferably 1 percent, seed crystals (based on total weight) of crystalline product.

The 2-(hydroxyalkyl) trialkylammonium compound may be the hydroxide or halide, e. g. chloride, iodide or bromide. When the compound is 2-(hydroxyethyl) trimethylammonium chloride, it is called choline chloride, a preferred source of organic cations (R) in the synthesis of zeolite ZSM-45.

The crystals prepared by the instant invention can be shaped into a wide variety of particle sizes. Generally speaking, the particles can be in the form of a powder, a granule, or a molded product, such as an extrudate having particle size sufficient to pass through a 2 mesh (Tyler) screen (sieve opening approx. 8 mm) and be retained on a 400 mesh (Tyler) screen (sieve opening 0.037 mm). In cases where the catalyst is molded, such as by extrusion, the crystals can be extruded before drying or partially dried and then extruded.

In catalytic applications it may be desirable to composite ZSM-45 with another material resistant to the temperatures and other conditions employed in organic conversion processes. Such materials include active and inactive material and synthetic or naturally occurring zeolites as well as inorganic materials such as clays, silica and/or metal oxides, e. g. alumina, and are described in our EP-A-1695.

Zeolite ZSM-45 is useful as catalyst component for a variety of organic, e. g. hydrocarbon compound conversion processes. Such conversion processes include, as non-limiting examples, cracking hydrocarbons with reaction conditions including a temperature of from about 300 °C to about 700 °C, a pressure of from about 0.1 atmosphere (bar) to about 30 atmospheres and a weight hourly space velocity of from about 0.1 to about 20 ; dehydrogenating hydrocarbon coumpounds with reaction conditions including a temperature of from about 300 °C to about 700 °C, a pressure of from about 0.1 atmosphere to about 10 atmospheres and a weight hourly space velocity of from about 0.1 to about 20 ; converting paraffins to aromatics with reaction conditions including a temperature of from about 100 °C to about 700 °C, a pressure of from about 0.1 atmosphere to about 60 atmospheres, a weight hourly space velocity of from about 0.5 to about 400 and a hydrogen/hydrocarbon mole ratio of from about 0 to about 20 ; converting olefins to aromatics, e. g. benzene, toluene and xylenes, with reaction conditions including a temperature of from about 100 °C to about 700 °C, a pressure of from about 0.1 atmosphere to about 60 atmospheres, a weight hourly space velocity of from about 0.5 to about 400 and a hydrogen/hydrocarbon mole ratio of from about 0 to about 20 ; converting alcohols, e. g. methanol, or ethers, e. g. dimethylether, or mixtures thereof to hydrocarbons including aromatics with reaction conditions including a temperature of from about 275 °C to about 600 °C, a pressure of from about 0.5 atmosphere to about 50 atmospheres and a liquid hourly space velocity of from about 0.5 to about 100 ; isomerizing xylene feedstock components with reaction conditions including a temperature of from about 230 °C to about 510 °C, a pressure of from about 3 atmospheres to about 35 atmospheres, a weight hourly space velocity of from about 0.1 to about 200 and a hydrogen/hydrocarbon mole ratio of from about 0 to about 100 ; disproportionating toluene with reaction conditions including a temperature of from about 200 °C to about 760 °C, a pressure of from about atmospheric to about 60 atmospheres and a weight hourly space velocity of from about 0.08 to about 20 ; alkylating aromatic hydrocarbons, e. g. benzene and alkylbenzenes, in the presence of an alkylating agent, e. g. olefins, formaldehyde, alkyl halides and alcohols, with reaction conditions including a temperature of from about 340 °C to about 500 °C, a pressure of from about atmospheric to about 200 atmospheres, a weight hourly space velocity of from about 2 to about 2000 and an aromatic hydrocarbon/alkylating agent mole ratio of from about 1/1 to about 20/1 ; and transalkylating aromatic hydrocarbons in the presence of polyalkylaromatic hydrocarbons with reaction conditions including a temperature of from about 340 °C to about 500 °C, a pressure of from about atmospheric to about 200 atmospheres, a weight hourly space velocity of from about 10 to about 1000 and an aromatic hydrocarbon/polyalkylaromatic hydrocarbon mole ratio of from about 1/1 to about 16/1.

In order to more fully illustrate the nature of the invention and the manner of practicing same, the following examples are presented. In the examples, whenever adsorption data are set forth for comparison of sorptive capacities for water, cyclohexane and/or n-hexane, they were determined as follows :

A weighed sample of the calcined adsorbant was contacted with the desired pure adsorbate vapor in an adsorption chamber, evacuated to < 1 mm (1.3 mbar) and contacted with 12 mm Hg (16 mbar) of water vapor or 20 mm Hg (26.7 mbar) of n-hexane, or cyclohexane vapor, pressures less than the vapor-liquid equilibrium pressure of the respective adsorbate at room temperature. The pressure was kept constant (within about ± 0.5 mm [0.7 mbar]) by addition of adsorbate vapor controlled by a manostat during the adsorption period, which did not exceed about 8 hours. As adsorbate was adsorbed by the new crystal, the decrease in pressure caused the manostat to open a valve which admitted more adsorbate vapor to the chamber to restore the above control pressures. Sorption was complete when the pressure change was not sufficient to activate the manostat. The increase in weight was calculated as the adsorption capacity of the sample in g/100 g of calcined adsorbant. The Alpha Test is described in the Journal of Catalysis, Vol. IV, pp. 522-529 (August 1965).

## Example 1

Three separate components were prepared to comprise ingredients as follows :

A. 15.45 grams of $Al_2(SO_4)_3 \cdot 18\ H_2O$
3.48 grams of $H_2SO_4$
90.2 grams of $H_2O$
B. 135.4 grams of Q-Brand sodium silicate (28.5 wt. percent $SiO_2$, 8.8 wt. percent $Na_2O$ and 62.7 wt. percent $H_2O$)
2.0 grams of 86.4 wt. percent KOH solution
11.0 grams of $H_2O$
C. 38.0 grams of choline chloride.

Component C was added to component B and A was then added to the whole. The whole composition was then mixed and the mixture was transferred to a polypropylene jar. Crystallization occurred under static conditions at 99 °C over 197 days. The crystalline product was separated, washed and dried and identified by X-ray diffraction analysis to be about 90 % zeolite ZSM-45 plus about 10 %

unidentified impurities. The complete X-ray pattern data for this zeolite is presented in Table 2, hereinafter.

Chemical analysis of the zeolite product of this example proved it to have the following composition :

| Component | Wt. percent |
|---|---|
| N | 2.07 |
| Na | 0.28 |
| K | 0.35 |
| $Al_2O_3$ | 7.40 |
| $SiO_2$ | 89.90 |
| Ash | 80.50 |
| $SiO_2/Al_2O_3$, molar | 20.7 |

Sorption capacities of the zeolite product of this example, calcined at 538 °C, were :

| Adsorbate | Capacity, wt. percent |
|---|---|
| Cyclohexane, (20 Torr) 26.7 mbar | 3.5 |
| n-Hexane, (20 Torr) 26.7 mbar | 12.9 |
| Water, (12 Torr) 16 mbar | 18.3 |

The surface area of the zeolite product of this example was measured to be 514 $m^2$/gram.

Table 2

| Degrees two theta | Interplanar D-spacing (A) | Relative intensity, $I/I_o$ |
|---|---|---|
| 7.72 | 11.45 | 6 |
| 8.60 | 10.28 | 13 |
| 10.91 | 8.11 | 50 |
| 11.45 | 7.73 | 3 |
| 11.65 | 7.60 | 6 |
| 13.41 | 6.60 | 36 |
| 15.60 | 5.68 | 6 |
| 16.00 | 5.54 | 9 |
| 17.38 | 5.10 | 81 |
| 17.84 | 4.97 | 12 |
| 20.98 | 4.23 | 51 |
| 22.08 | 4.03 | 100 |
| 23.44 | 3.80 | 45 |
| 25.05 | 3.55 | 13 |
| 25.53 | 3.49 | 5 |
| 25.94 | 3.43 | 5 |
| 27.12 | 3.29 | 20 |
| 28.53 | 3.13 | 47 |
| 29.38 | 3.04 | 6 |

Table 2 (Continued)

| Degrees two theta | Interplanar D-spacing (A) | Relative intensity, $I/I_o$ |
|---|---|---|
| 31.70 | 2.823 | 8 |
| 32.45 | 2.759 | 40 |
| 34.57 | 2.595 | 10 |
| 35.25 | 2.546 | 2 |
| 35.46 | 2.531 | 2 |
| 38.08 | 2.363 | 2 |
| 38.41 | 2.344 | 1 |
| 39.80 | 2.265 | 3 |
| 40.50 | 2.227 | 1 |
| 41.25 | 2.189 | 3 |
| 42.23 | 2.140 | 3 |
| 43.00 | 2.103 | 8 |
| 44.52 | 2.035 | 2 |
| 45.10 | 2.010 | 4 |
| 46.89 | 1.938 | 1 |
| 47.32 | 1.921 | 1 |
| 48.02 | 1.895 | 6 |
| 48.90 | 1.863 | 6 |
| 49.40 | 1.845 | 3 |
| 50.10 | 1.821 | 7 |
| 51.61 | 1.771 | 12 |
| 52.42 | 1.745 | 1 |
| 53.00 | 1.728 | 2 |
| 53.50 | 1.713 | 1 |
| 54.10 | 1.695 | 1 |
| 55.00 | 1.670 | 1 |
| 55.58 | 1.653 | 3 |
| 56.02 | 1.642 | 8 |
| 56.82 | 1.620 | 3 |
| 57.35 | 1.607 | 2 |
| 59.15 | 1.562 | 5 |

Example 2

About 10 grams of the zeolite ZSM-45 product of Example 1 was calcined in air at 538 °C for 10 hours and then contacted with 10 $cm^3$/gram zeolite of 5 percent ammonium chloride solution at 29 °C five separate times. The resulting zeolite was then dried at about 110 °C and calcined at 538 °C for 10 hours in air. It was then submitted for evaluation in the Alpha Test. Its Alpha Value proved to be 14.

Example 3

Three separate components were prepared to comprise ingredients as follows :

A. 15.45 grams of $Al_2(SO_4)_3 \cdot 18\ H_2O$
3.48 grams of $H_2SO_4$
90.2 grams of $H_2O$
B. 135.4 grams of Q-Brand sodium silicate (28.5 wt. percent $SiO_2$, 8.8 wt. percent $Na_2O$ and 62.7 wt. percent $H_2O$)
2.0 grams of 86.4 wt. percent KOH solution
50.0 grams of $H_2O$
C. 38.0 grams of choline chloride

Component C was added to component B and component A was then added to the whole. The whole composition was then mixed and the mixture was transferred to a polypropylene jar. Crystallization occurred under static conditions at 99 °C over 152 days. The crystalline product was separated, washed and dried and identified by X-ray diffraction analysis to be the zeolite ZSM-45.

Chemical analysis of the zeolite product of this example proved it to have the following composition :

| Component | Wt. percent |
|---|---|
| N | 2.25 |
| Na | 0.43 |
| K | 0.25 |
| $Al_2O_3$ | 7.60 |
| $SiO_2$ | 89.00 |
| Ash | 78.90 |

Sorption capacities of the zeolite product of this example, calcined at 538 °C, were :

| Adsorbate | Capacity, wt. percent |
|---|---|
| Cyclohexane, (20 Torr) 26.7 mbar | 3.8 |
| n-Hexane, (20 Torr) 26.7 mbar | 11.3 |
| Water, (12 Torr) 16 mbar | 16.2 |

The surface area of the zeolite product of this example was measured to be 467 $m^2$/gram.

Example 4

About 10 grams of the zeolite ZSM-45 product of Example 3 was calcined in air at 538 °C for 10 hours and then contacted with 5 % ammonium chloride solution, dried and calcined as in Example 2. It was then submitted for evaluation in the Alpha Test. Its Alpha Value proved to be 6.

Example 5

Three separate components were prepared to comprise ingredients as follows :

A. 28.7 grams of sodium aluminate
36.0 grams of NaOH
10.0 grams of 85 wt. percent KOH solution
450.0 grams of $H_2O$
B. 650.0 grams of colloidal silica (30 wt. percent)
C. 190.0 grams of choline chloride.

Component C was added to component A and component B was then added to the whole. The whole composition was then mixed and the mixture was transferred to a polypropylene jar. Crystallization occurred under static conditions at 121 °C over 21 days. The crystalline product was separated, washed

and dried and identified by X-ray diffraction analysis to be about 85 percent zeolite ZSM-45 plus about 15 percent unidentified impurities. The complete X-ray pattern data for this zeolite is presented in Table 3, hereinafter.

Chemical analysis of the zeolite product of this example proved it to have the following composition :

| Component | Wt. percent |
|---|---|
| N | 2.34 |
| Na | 0.49 |
| K | 0.58 |
| $Al_2O_3$ | 6.90 |
| $SiO_2$ | 72.60 |
| Ash | 81.50 |

Sorption capacities of the zeolite product of this example, calcined at 538 °C, were :

| Adsorbate | Capacity, wt. percent |
|---|---|
| Cyclohexane, (20 Torr) 26.7 mbar | 5.0 |
| n-Hexane, (20 Torr) 26.7 mbar | 11.0 |
| Water, (12 Torr) 16 mbar | 14.5 |

The surface area of the zeolite product of this example was measured to be 484 $m^2$/gram.

Table 3

| Degrees two theta | Interplanar D-spacing (A) | Relative intensity, $I/I_o$ |
|---|---|---|
| 7.78 | 11.36 | 14 |
| 8.67 | 10.20 | 11 |
| 11.00 | 8.04 | 37 |
| 11.69 | 7.57 | 8 |
| 12.60 | 7.03 | 4 |
| 13.15 | 6.73 | 8 |
| 13.49 | 6.60 | 37 |
| 15.55 | 5.70 | 6 |
| 16.05 | 5.52 | 9 |
| 17.45 | 5.08 | 65 |
| 17.88 | 4.96 | 20 |
| 19.45 | 4.56 | 6 |
| 20.72 | 4.29 | 20 |
| 21.07 | 4.22 | 47 |
| 22.12 | 4.02 | 100 |
| 23.49 | 3.79 | 62 |
| 25.14 | 3.54 | 38 |
| 25.91 | 3.44 | 18 |

Table 3 (Continued)

| Degrees two theta | Interplanar D-spacing (A) | Relative intensity, $I/I_o$ |
|---|---|---|
| 26.90 | 3.31 | 10 |
| 27.19 | 3.28 | 27 |
| 28.35 | 3.15 | 13 |
| 28.63 | 3.12 | 40 |
| 29.40 | 3.04 | 7 |
| 31.54 | 2.84 | 11 |
| 31.75 | 2.819 | 10 |
| 32.51 | 2.754 | 35 |
| 34.65 | 2.589 | 6 |
| 35.50 | 2.529 | 2 |
| 36.25 | 2.478 | 5 |
| 38.10 | 2.362 | 3 |
| 39.80 | 2.265 | 2 |
| 41.25 | 2.189 | 2 |
| 42.28 | 2.138 | 3 |
| 43.05 | 2.101 | 7 |
| 45.17 | 2.007 | 3 |
| 48.11 | 1.891 | 5 |
| 48.90 | 1.863 | 4 |
| 49.45 | 1.843 | 3 |
| 50.19 | 1.817 | 6 |
| 51.74 | 1.767 | 11 |
| 52.94 | 1.730 | 1 |
| 55.68 | 1.651 | 4 |
| 56.15 | 1.638 | 6 |
| 56.94 | 1.617 | 1 |
| 59.26 | 1.559 | 3 |

Example 6

About 10 grams of the zeolite ZSM-45 product of Example 5 was calcined in air at 538 °C for 10 hours and then contacted with 5 percent ammonium chloride solution, dried and calcined as in Example 4. It was then submitted for evaluation in the Alpha Test. Its Alpha Value proved to be 27.

Example 7

Three separate components were prepared to comprise ingredients as follows :

A. 23.2 grams of $Al_2(SO_4)_3 \cdot 18\ H_2O$
5.2 grams of $H_2SO_4$
135 grams of $H_2O$
B. 203.1 grams of Q-Brand sodium silicate (28.5 wt. percent $SiO_2$, 8.8 wt. percent $Na_2O$ and 62.7 wt. percent $H_2O$)
3.0 grams of 86.4 wt. percent KOH solution
75.0 grams of $H_2O$
C. 57.0 grams of choline chloride.

Component C was added to component B and A was then added to the whole. The whole composition was then mixed and the mixture was transferred to a polypropylene jar. Crystallization occurred under static conditions at 100 °C over 151 days. The crystalline product was separated, washed and dried and identified by X-ray diffraction analysis to be 100 percent zeolite ZSM-45. The complete X-ray pattern data for this zeolite is presented in Table 4, hereinafter.

Chemical analysis of the zeolite product of this example proved it to have the following composition :

| Component | Wt. percent |
|---|---|
| N | 2.26 |
| Na | 0.37 |
| K | 0.79 |
| $Al_2O_3$ | 7.48 |
| $SiO_2$ | 85.8 |
| Ash | 82.8 |
| $SiO_2/Al_2O_3$, molar | 19.5 |

Sorption capacities of the zeolite product of this example, calcined at 538 °C, were :

| Adsorbate | Capacity, wt. percent |
|---|---|
| Cyclohexane, (20 Torr) 26.7 mbar | 3.4 |
| n-Hexane, (20 Torr) 26.7 mbar | 12.9 |
| Water, (12 Torr) 16 mbar | 21.1 |

The surface area of the zeolite product of this example was measured to be 471 $m^2$/gram.

Table 4

| Degrees two theta | Interplanar D-spacing (A) | Relative intensity, $I/I_o$ |
|---|---|---|
| 7.77 | 11.38 | 4 |
| 8.71 | 10.15 | 10 |
| 11.04 | 8.02 | 45 |
| 11.71 | 7.56 | 6 |
| 13.52 | 6.55 | 36 |
| 15.67 | 5.66 | 2 |
| 16.11 | 5.50 | 10 |
| 17.49 | 5.07 | 76 |
| 17.93 | 4.95 | 13 |
| 19.57 | 4.54 | 4 |

Table 4 (Continued)

| Degrees two theta | Interplanar D-spacing (A) | Relative intensity, $I/I_o$ |
|---|---|---|
| 21.10 | 4.21 | 50 |
| 22.18 | 4.01 | 100 |
| 23.54 | 3.78 | 47 |
| 23.80 | 3.74 | 8 |
| 25.16 | 3.54 | 15 |
| 26.08 | 3.42 | 5 |
| 27.24 | 3.27 | 24 |
| 28.67 | 3.11 | 44 |
| 29.46 | 3.03 | 7 |
| 31.84 | 2.810 | 7 |
| 32.55 | 2.750 | 38 |
| 34.72 | 2.584 | 9 |
| 35.42 | 2.534 | 3 |
| 35.62 | 2.520 | 2 |
| 36.28 | 2.476 | 5 |
| 37.42 | 2.403 | 2 |
| 38.22 | 2.355 | 1 |
| 38.48 | 2.339 | 1 |
| 39.95 | 2.257 | 2 |
| 40.50 | 2.227 | 2 |
| 41.36 | 2.183 | 3 |
| 42.40 | 2.132 | 3 |
| 43.12 | 2.098 | 7 |
| 44.70 | 2.027 | 6 |
| 45.22 | 2.005 | 4 |
| 47.35 | 1.920 | 2 |
| 48.16 | 1.889 | 5 |
| 49.03 | 1.858 | 4 |
| 49.50 | 1.841 | 3 |
| 50.23 | 1.816 | 6 |

Table 4 (Continued)

| Degrees two theta | Interplanar D-spacing (A) | Relative intensity, $I/I_o$ |
|---|---|---|
| 51.76 | 1.766 | 11 |
| 53.01 | 1.727 | 2 |
| 53.75 | 1.705 | 2 |
| 55.68 | 1.651 | 3 |
| 56.15 | 1.638 | 6 |
| 56.99 | 1.616 | 2 |
| 57.39 | 1.605 | 1 |
| 59.30 | 1.558 | 4 |

**Claims**

1. A method of synthesising zeolite ZSM-45 which comprises preparing a mixture containing sources of alkali metal ions (M), an oxide of aluminium, an oxide of silicon, an organic cation (R) derived from a 2-(hydroxyalkyl) trialkylammonium compound and water and having a composition, in terms of moles of oxides, falling within the following ranges :

| | |
|---|---|
| $SiO_2/Al_2O$ | 10-150 |
| $OH^-/SiO_2$ | 0.3-1.0 |
| $H_2O/OH^-$ | 20-100 |
| R/R + M | 0.1-0.8 |
| K/K + Na | 0.0-0.8 |

and maintaining said mixture until the zeolite crystallises and, optionally, subjecting the crystallised zeolite to thermal treatment.

2. A method according to claim 1 wherein said mixture has a composition, in terms of moles of oxides, falling within the following ranges.

| | |
|---|---|
| $SiO_2/Al_2O_3$ | 15-80 |
| $OH^-/SiO_2$ | 0.3-0.8 |
| $H_2O/OH^-$ | 20-80 |
| R/R + M | 0.2-0.7 |
| K/K + Na | 0.05-0.3 |

3. A method according to claim 1 or claim 2 wherein R is derived from a 2-(hydroxyethyl) trimethylammonium compound.

4. A method according to any of claims 1 to 3 which comprises drying and calcining the zeolite obtained.

5. A method according to any of claims 1 to 4 which comprises base-exchanging the zeolite obtained with cations of hydrogen, hydrogen precursors, rare earth and/or metals of groups IA, IIA, IIIA, IVA, IB, IIB, IIIB, IVB, VIB and/or VIII of the Periodic Table of the Elements.

**Patentansprüche**

1. Verfahren zur Synthese von Zeolith ZSM-45, bei dem eine Mischung hergestellt wird, die Quellen von Alkalimetallionen (M), ein Oxid von Aluminium, ein Oxid von Silicium, ein von einer 2-(Hydroxyalkyl)-trialkylammoniumverbindung abgeleitetes organisches Kation (R) und Wasser enthält und bezogen auf die Mole der Oxide eine Zusammensetzung innerhalb der folgenden Bereiche aufweist :

| | |
|---|---|
| $SiO_2/Al_2O_3$ | 10-150 |
| $OH^-/SiO_2$ | 0,3-1,0 |
| $H_2O/OH^-$ | 20-100 |
| R/R + M | 0,1-0,8 |
| K/K + Na | 0,0-0,8 |

und diese Mischung gehalten wird, bis der Zeolith kristallisiert und wahlweise der kristallisierte Zeolith einer thermischen Behandlung unterzogen wird.

2. Verfahren nach Anspruch 1, worin die Mischung bezogen auf die Mole der Oxide eine Zusammensetzung innerhalb der folgenden Bereiche aufweist :

| | |
|---|---|
| $SiO_2/Al_2O_3$ | 15-80 |
| $OH^-/SiO_2$ | 0,3-0,8 |
| $H_2O/OH^-$ | 20-80 |
| R/R + M | 0,2-0,7 |
| K/K + Na | 0,05-0,3 |

3. Verfahren nach Anspruch 1 oder 2, worin R von einer 2-(Hydroxyethyl) trimethylammoniumverbindung abgeleitet ist.

4. Verfahren nach einem der Ansprüche 1 bis 3, das das Trocknen und Kalzinieren des erhaltenen Zeoliths umfaßt.

5. Verfahren nach einem der Ansprüche 1 bis 4, das den Basenaustausch des erhaltenen Zeoliths mit Kationen von Wasserstoff, Wasserstoffvorstufen, Metallen der Seltenen Erden und/oder Metallen der Gruppen IA, IIA, IIIA, IVA, IB, IIB, IIIB, IVB, VIB und/oder VIII des Periodensystems der Elemente umfaßt.

**Revendications**

1. Un procédé de synthèse de zéolite ZSM-45 consistant à préparer un mélange contenant des sources d'ions métalliques (M), un oxyde d'aluminium, un oxyde de silicium, un cation organique (R) provenant d'un dérivé de 2-(hydroxyalkyl)-trialkylammonium, et de l'eau et présentant une composition, exprimée en moles d'oxydes, comprise dans la gamme suivante :

| | |
|---|---|
| $SiO_2/Al_2O_3$ | 10-150 |
| $OH^-/SiO_2$ | 0,3-1,0 |
| $H_2O/OH^-$ | 20-100 |
| R/R + M | 0,1-0,8 |
| K/K + Na | 0,0-0,8 |

et à maintenir en l'état ledit mélange jusqu'à ce que la zéolite cristallise et, éventuellement, à soumettre la zéolite cristallisée à un traitement thermique.

2. Un procédé selon la revendication 1, dans lequel ledit mélange présente une composition, comprise dans la gamme suivante :

| | |
|---|---|
| $SiO_2Al_2O_3$ | 15-80 |
| $OH^-/SiO_2$ | 0,3-0,8 |
| $H_2O/OH^-$ | 20-80 |
| R/R + M | 0,2-0,7 |
| K/K + Na | 0,05-0,3 |

3. Un procédé selon la revendication 1 ou la revendication 2 dans lequel R est un dérivé de 2(hydroxyéthyl) triméthylammonium.

4. Un procédé selon une quelconque des revendications 1 à 3 qui consiste à sécher et à calciner la zéolite obtenue.

5. Un procédé selon une quelconque des revendications 1 à 4 qui consiste à soumettre la zéolite obtenue à un échange de base avec des cations d'hydrogène, de précurseurs d'hydrogène, de terres rares et/ou de métaux des groupes IA, IIA, IIIA, IVA, IB, IIB, IIIB, IVB, VIB et/ou VIII de la classification périodique des éléments.